# EUROPEAN PATENT SPECIFICATION

(11) **EP 2 128 179 B1**
(45) Date of publication and mention of the grant of the patent: **03.08.2011**
(21) Application number: 09160705.1
(22) Date of filing: 20.05.2009
(51) Int. Cl.: C08F 212/00, C08F 212/08, C08F 212/14, C08J 9/20, C07H 21/00

(54) **Solid-phase support for nucleic acid synthesis**
Festphasenträger für die Nukleinsäuresynthese
Support en phase solide pour synthèse d'acide nucléique

(30) Priority: 26.05.2008 JP 2008136468
(43) Date of publication of application: 02.12.2009
(73) Proprietor: Nitto Denko Corporation, Ibaraki-shi Osaka 567-8680 (JP)
(72) Inventor: Mori, Kenjiro, Ibaraki-shi Osaka 567-8680 (JP); Maeta, Eri, Ibaraki-shi Osaka 567-8680 (JP)
(74) Representative: Grünecker, Kinkeldey, Stockmair & Schwanhäusser Anwaltssozietät

(56) References cited:
- EP-A1- 1 510 541
- EP-A1- 1 595 895
- EP-A1- 1 602 670
- EP-A1- 2 055 722
- EP-A1- 2 055 723
- EP-A1- 2 055 724
- DELEUZE H; SHERRINGTON D C: "POLY(P-ACETOXYSTYRENE) RESIN: A PROSPECTIVE NEW SUPPORT FOR COMBINATORIAL SYNTHESIS" JOURNAL OF THE CHEMICAL SOCIETY. PERKIN TRANSACTIONS 1, CHEMICAL SOCIETY. LETCHWORTH, GB, 1 December 1995 (1995-12-01), pages 2217-2221, XP002024268 ISSN: 0300-922X

## Description

### FIELD OF THE INVENTION

This invention relates to a solid-phase support constituted of a porous copolymer particle, which is for use in nucleic acid synthesis.

### BACKGROUND OF THE INVENTION

Chemical synthesis of oligodeoxyribonucleotide, oligoribonucleotide or the like nucleic acid by solid-phase synthesis has been already known. For example, according to the well known phosphoamidite method, a nucleic acid is synthesized in the following manner.

That is, a nucleoside which becomes the 3' end of the nucleic acid to be synthesized is loaded on a solid-phase support via a linker such as succinyl group. Next, this nucleoside-linker-loading solid-phase support is put into a reaction vessel of a nucleic acid automatic synthesizer, and acetonitrile is poured into it as the solvent. Thereafter, in accordance with its synthesis program, the nucleic acid automatic synthesizer repeats a cycle consisting of deprotection reaction of 5'-OH group of the aforementioned nucleoside, coupling reaction of nucleoside phosphoamidite to the 5'-OH group, capping reaction of unreacted 5'-OH group and oxidation reaction of the formed phosphite, thereby resulting in the synthesis of a nucleic acid having the intended sequence. The finally-synthesized nucleic acid is cleaved from the solid-phase support by hydrolyzing the linker using ammonia or the like (cf. Non-patent reference 1).

In such a solid-phase synthesis of nucleic acid, an inorganic particle such as CPG (controlled pore glass) or silica gel has been widely and conventionally used as the above-mentioned solid-phase support. Regarding the reason for this, for example, when a high-swelling low-crosslinkable polystyrene particle which is used in the peptide solid-phase synthesis is used as the solid-phase support in the nucleic acid synthesis, it is considered that nucleic acid cannot be synthesized with a high purity due to problems such as the requirement of time for effecting flow of the synthesis reagents and solvents into and out of the solid-phase support frequently carried out during the process of the synthesis cycle. On the other hand, in order to improve chemical stability for acid and alkali to be used in the nucleic acid synthesis, a highly crosslinked non-swelling porous polystyrene particle has also been used as a solid-phase support for nucleic acid synthesis (cf. Patent Reference 1).

However, in the case of using the above-mentioned CPG or non-swelling porous polystyrene particle as the solid-phase support for nucleic acid synthesis, when the nucleic acid synthesis is carried out with increasing loading amount of the nucleoside-linker for the purpose of increasing the synthesized amount of nucleic acid per solid-phase support, there has been a problem in that purity of the formed nucleic acid is considerably lowered.
Non-patent reference 1 : Current Protocols in Nucleic Acid Chemistry (2000)
Patent Reference 1 : JP-A-03-068593

### SUMMARY OF THE INVENTION

With the aim of solving the above-mentioned problems in the nucleic acid synthesis using a solid-phase support, the present inventors have conducted intensive studies and found as a result that a porous copolymer particle obtained by optimally adjusting the swelling volume thereof in acetonitrile as well as the median particle diameter thereof is excellent as a solid-phase support for nucleic acid synthesis, thereby resulting in the accomplishment of the invention. That is, the invention aims at providing a solid-phase support for nucleic acid synthesis, by which a high-purity nucleic acid can be obtained with a high yield.

Namely, the present invention provides the following items 1 to 3.
1. A solid-phase support for nucleic acid synthesis, which comprises a porous copolymer particle comprising a multifunctional vinyl monomer unit having two or more vinyl groups in one molecule and a monofunctional vinyl monomer unit having one vinyl group in one molecule, wherein the solid-phase support has a swelling volume when soaked in acetonitrile of 3.5 ml/g or more and has a median particle diameter measured by a laser scattering particle size distribution measuring method within a range of from 50 to 120 µm.
2. The solid-phase support according to item 1 above, wherein the monofunctional vinyl monomer unit comprises styrene, and the multifunctional vinyl monomer unit is at least one species selected from the group consisting of divinylbenzene, (poly)ethylene glycol di(meth)acrylate, (poly)propylene glycol di(meth)acrylate and an alkane polyol poly(meth)acrylate.
3. The solid-phase support according to item 1 above, wherein the monofunctional vinyl monomer unit comprises styrene and acetoxystyrene.

By the use of the solid-phase support for nucleic acid synthesis of the invention, a high-purity nucleic acid can be obtained with a high yield.

### DETAILED DESCRIPTION OF THE INVENTION

The solid-phase support for nucleic acid synthesis of the invention is constituted of a porous copolymer particle containing a multifunctional vinyl monomer unit having two or more vinyl groups in one molecule and a monofunctional vinyl monomer unit having one vinyl group in one molecule, in which the solid-phase support has a swelling volume when soaked in acetonitrile of 3.5 ml/g or more and has a median particle diameter measured by a laser scattering type particle size distribution measuring method within the range of from 50 to 120 µm.

According to the invention, the multifunctional vinyl monomer is not particularly limited so long as it can form a copolymer having a crosslinked network structure by its copolymerization with a monofunctional vinyl monomer which is described later. For example, there may be mentioned, a polyvinylbenzene which has two or more, preferably two or three, vinyl groups in the molecule, such as divinylbenzene (p- or m-divinylbenzene or a mixture thereof) or trivinylbenzene; a polyvinylcyclohexane which has two or more, preferably two or three, vinyl groups in the molecule, such as divinylcycloxaxane or trivinylcyclohexane; a (poly)ethylene glycol di(meth)acrylate such as ethylene glycol di(meth)acrylate, diethylene glycol di(meth)acrylate, triethylene glycol di(meth)acrylate or polyethylene glycol di(meth)acrylate having 4 or more ethylene glycol units; a (poly)propylene glycol di(meth)acrylate such as propylene glycol di(meth)acrylate, dipropylene glycol di(meth)acrylate, tripropylene glycol di(meth)acrylate or polypropylene glycol di(meth)acrylate having 4 or more propylene glycol units; an alkane polyol poly(meth)acrylate having from 4 to 10 carbon atoms, such as butanediol di(meth)acrylate, hexanediol di(meth)acrylate, nonanediol di(meth)acrylate, trimethylolpropane tri(meth)acrylate or pentaerythritol tri(meth)acrylate, and the like.

Among the above-mentioned substances, it is desirable that the multifunctional vinyl monomer which constitutes the porous copolymer of the invention is at least one species selected from the group consisting of divinylbenzene, (poly)ethylene glycol di(meth)acrylate, (poly)propylene glycol di(meth)acrylate and an alkane polyol poly(meth)acrylate.

According to the invention, the ratio of the multifunctional vinyl monomer unit in the porous copolymer is generally within the range of from 0.1 to 2 mmol/g, preferably within the range of from 0.3 to 1 mmol/g. When the ratio of the multifunctional vinyl monomer unit in the porous copolymer is less than 0.1 mmol/g, solvent resistance, heat stability and porosity of the porous copolymer particle to be obtained are not sufficient, so that when used as a solid-phase support in the solid-phase synthesis of a nucleic acid, there is a tendency that synthesized amount of the nucleic acid to be obtained becomes small and purity of the nucleic acid to be obtained also becomes low. On the contrary, when the ratio of the multifunctional vinyl monomer unit in the porous copolymer exceeds 2 mmol/g, the porous copolymer particle to be obtained has a low swelling degree in the organic solvent, so that when used as a solid-phase support, there is a tendency that synthesized amount of the nucleic acid to be obtained becomes small and its purity also becomes low.

According to the invention, the monofunctional vinyl monomer unit in the porous copolymer is not particularly limited, but an aromatic vinyl compound can be mentioned as a typical example.

As such an aromatic vinyl compound, for example, in addition to styrene, there may be mentioned alkyl styrene such as methylstyrene, ethylstyrene, dimethylstyrene, trimethylstyrene or butylstyrene, styrene halide such as chlorostyrene, dichlorostyrene, fluorostyrene, pentafluorostyrene or bromostyrene, alkyl styrene halide such as chloromethylstyrene or fluoromethylstyrene, as well as vinyl benzoate, styrene sulfonate sodium, aminostyrene, cyanostyrene, methoxystyrene, ethoxystyrene, butoxystyrene, acetoxystyrene, nitrostyrene and the like.

According to the invention, for the purpose of effecting possession of various types of functional group which becomes the starting point of the solid-phase synthesis of nucleic acid, the porous copolymer particle has a monofunctional vinyl monomer unit which has such a functional group. For example, when such a functional group is a hydroxyl group, for example, hydroxystyrene can be mentioned as the monofunctional vinyl monomer unit having such a functional group. Incidentally, according to the invention, by producing a porous copolymer particle having, as the monomer unit, an aromatic vinyl compound having a substituent group which can be converted into a hydroxyl group by hydrolysis (that is, a substituent group which forms a precursor of a functional group that becomes a starting point of the solid-phase synthesis of nucleic acid) such as acetoxystyrene, followed by hydrolyzing the porous copolymer particle, it can be made into a porous copolymer particle having an hydroxyl group.

In addition, when the porous copolymer particle has an amino group as a functional group which becomes the starting point of solid-phase synthesis of nucleic acid, for example, aminostyrene can be mentioned as the monofunctional vinyl monomer unit having an amino group.

According to the invention, in addition to the above-mentioned aromatic vinyl compound, for example, a (meth)acrylic acid alkyl ester, vinyl acetate, (meth)acrylonitrile, 2-vinylpyridine, 1-vinylpyrrolidone and the like may be mentioned as the monofunctional vinyl monomer unit.

As the above-mentioned (meth)acrylic acid alkyl ester, for example, a straight or branched chain alkyl ester having from 1 to 10 carbon atoms is preferable. Specific examples thereof include methyl acrylate, butyl acrylate, 2-ethylhexyl acrylate, methoxyethyl acrylate, methyl methacrylate, ethyl methacrylate, butyl methacrylate, hexyl methacrylate, 2-ethylhexyl methacrylate, stearyl methacrylate, polyethylene glycol methacrylate, benzyl methacrylate, trifluoromethyl methacrylate and octafluoropentyl methacrylate.

According to the invention, the porous copolymer particle can also have the starting point of solid-phase synthesis of nucleic acid by possessing as the monofunctional vinyl monomer unit, for example, a (meth)acrylic acid alkyl ester having a hydroxyl group as the functional group. As such a (meth)acrylic acid alkyl ester having a hydroxyl group, for example, 2-hydroxyethyl acrylate, 2-hydroxyethyl methacrylate, 2-hydroxypropyl acrylate, 2-hydroxypropyl methacrylate, 2-hydroxybutyl acrylate, 4-hydroxybutyl methacrylate and the like may be mentioned.

According to the invention, the ratio of the above-mentioned monofunctional vinyl monomer unit having a functional group as the starting point for the solid-phase synthesis of nucleic acid in the porous polymer particle is within the range of from 0.01 to 1 mmol/g, preferably within the range of from 0.05 to 0.5 mmol/g. When the ratio of the monofunctional vinyl monomer unit having a functional group in the porous polymer particle is less than 0.01 mmol/g, since the amount of the functional group as the starting point of synthesis is small when used as the solid-phase support, synthesized amount of the nucleic acid becomes small. On the contrary, when the ratio of the monofunctional vinyl monomer unit having a functional group in the porous polymer particle is more than 1 mmol/g, since the distance between adjacent functional groups becomes insufficient when used a solid-phase support, the chemical reactions which occur with adjoining each other are mutually inhibited and as a result, purity of the nucleic acid to be obtained tends to be low.

The solid-phase support for nucleic acid synthesis according to the invention, which is constituted of the above-mentioned porous copolymer particle, is not particularly limited with regard to its shape, but is preferably in a particulate form and its median particle diameter measured by a laser scattering type particle size distribution measuring method is within the range of from 50 to 120 µm, preferably within the range of from 70 to 100 µm. When the median particle diameter of the solid-phase support for nucleic acid synthesis is less than 50 µm, purity of the nucleic acid to be obtained tends to be low when used as a solid-phase support. On the other hand, when its median particle diameter is more than 120 µm, since a time is required for effecting flow of the synthesis reagents and solvents into and out of the solid-phase support when used as a solid-phase support, synthesized amount and purity of the nucleic acid to be obtained tend to be lowered.

According to the invention, the median particle diameter of the solid-phase support for nucleic acid synthesis is measured by a laser scattering type particle size distribution measuring method. Illustratively, a sample of solid-phase support for nucleic acid synthesis is allowed to undergo ultrasonic dispersion in an ethanol/water mixture of 50/50 in volume ratio, and its median particle diameter is calculated by measuring the thus-obtained dispersion by a laser scattering type particle size distribution measuring device (LA-920 mfd. by Horiba, Ltd.) using the ethanol/water mixture of 50/50 in volume ratio as the measuring dispersion medium.

The solid-phase support for nucleic acid synthesis according to the invention has a swelling volume of 3.5 ml/g or more, preferably 4.0 ml/g or more, when soaked in acetonitrile. When the swelling volume when soaked in acetonitrile is less than 3.5 ml/g, it becomes difficult to effect flow of the synthesis reagents and solvents into and out of the solid-phase support when used as a solid-phase support for nucleic acid synthesis and a sufficient space for synthesizing the nucleic acid cannot be obtained within the solid-phase support, so that synthesized amount and purity of the nucleic acid are lowered. Upper limit of the swelling volume of the solid-phase support for nucleic acid synthesis according to the invention when soaked in acetonitrile is not particularly limited, but is generally 10 ml/g.

The swelling volume when a sample of the solid-phase support for nucleic acid synthesis is soaked in acetonitrile is measured using measuring cylinder. Illustratively, 1.00 g of a sample of the solid-phase support for nucleic acid synthesis is put into a 10 ml capacity measuring cylinder, excess amount of acetonitrile is poured into the measuring cylinder and lightly shaken or stirred to effect degassing, the sample is sufficiently precipitated by allowing it to stand still for 12 hours and then its apparent volume is read from the scale of the measuring cylinder.

The production process of the solid-phase support for nucleic acid synthesis according to the invention is not particularly limited and it can be produced, for example, by suspension copolymerization or seed copolymerization. Production thereof by suspension polymerization is described in the following as an example.

Firstly, water and a dispersion stabilizer are put into a polymerization flask equipped with a condenser and a nitrogen gas introducing tube and stirred to effect dissolution or dispersion of the dispersion stabilizer in water. Next, a mixture containing a monomer mixture containing a multifunctional vinyl monomer and a monofunctional vinyl monomer (preferably a monofunctional vinyl monomer having a functional group, or a substituent group which forms a precursor thereof, that becomes a starting point of the solid-phase synthesis of nucleic acid), a porous structure forming agent and a polymerization initiator is added into the above-described flask, the thus-obtained mixture is stirred and emulsified at a temperature under which the initiator does not degrade, thereby forming a suspension copolymerization system, and suspension copolymerization is then carried out by heating the same at a predetermined temperature under an atmosphere of an inert gas.

The dispersion stabilizer is used for dispersing and stabilizing the mixture containing a monomer mixture, a porous structure forming agent and an initiator, as oil droplets in water. The dispersion stabilizer is not particularly limited, and those which are conventionally known are optionally used. For example, polyvinyl alcohol, polyacrylic acid, gelatin, starch, carboxymethyl cellulose and the like hydrophilic protective colloid agents, calcium carbonate, magnesium carbonate, calcium phosphate, barium sulfate, calcium sulfate, bentonite and the like slightly soluble powders, and the like may be used. Amount of the dispersion stabilizer to be used is not particularly limited, but preferably, it is within the range of from 0.01 to 10% by weight based on the weight of water in the suspension copolymerization system. When the dispersion stabilizer is less than 0.01 % by weight based on the weight of water in the suspension copolymerization system, dispersion stability of the suspension copolymerization is spoiled and a large amount of aggregates are formed. On the contrary, when the dispersion stabilizer is more than 10% by weight based on the weight of water in the suspension copolymerization system, a large number of fine particles having a particle diameter of about 5 µm or less are formed.

The porous structure forming agent is used for providing the copolymer particle to be obtained with a porous structure. As the porous structure forming agent, an organic solvent or a synthetic high polymer is used. As the organic solvent, a hydrocarbon or an alcohol is preferably used, though it is not particularly limited so long as it is not concerned in the polymerization reaction, is slightly soluble in water and also dissolves in the aforementioned multifunctional and monofunctional vinyl monomers but does not dissolve in the formed copolymer.

As the hydrocarbon, a saturated or unsaturated aliphatic hydrocarbon or aromatic hydrocarbon is used. Preferably, the hydrocarbon is an aliphatic or aromatic hydrocarbon having from 5 to 12 carbon atoms, and specific examples thereof include n-hexane, n-heptane, n-octane, isooctane, decane, undecane, dodecane and toluene. The alcohol is preferably an aliphatic alcohol and particularly preferably an aliphatic alcohol having from 5 to 12 carbon atoms, and specific examples thereof include 2-ethylhexyl alcohol, t-amyl alcohol, nonyl alcohol, 2-octanol, nonanol, decanol, lauryl alcohol and cyclohexanol. These hydrocarbons and alcohols may be respectively used alone or as a combination of two species or more.

In the suspension copolymerization, the porous structure forming agent is used generally within the range of from 0.5 to 2.5 times, preferably within the range of from 1.0 to 2.0 times, based on the total weight of the monomers. In the suspension copolymerization, when the ratio of the porous structure forming agent is less than 0.5 time based on the total weight of the monomers, both of the pour and pour volume of the porous copolymer particle to be obtained become small so that, as a result, when the porous copolymer particle to be obtained is used as a support for nucleic acid synthesis, synthesized amount and purity of the nucleic acid tend to be low as described in the foregoing. On the other hand, in the suspension copolymerization, when the ratio of the porous structure forming agent is more than 2.5 times based on the total weight of the monomers, the porous structure is collapsed so that a particulate shape is not formed. That is, aggregates of polymer particles having various sizes and non-porous aggregates of polymers are formed, and when such aggregates are used as the solid-phase support, synthesized amount of the nucleic acid to be obtained becomes considerably small.

The initiator is not particularly limited too, and conventionally known substances are arbitrarily used. For example, there may be used dibenzoyl peroxide, dilauroyl peroxide, distearoyl peroxide, 1,1-di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, di-t-hexyl peroxide, t-butylcumyl peroxide, di-t-butyl peroxide, 1,1,3,3-tetramethylbutylperoxy-2-ethyl hexanoate, t-hexylperoxy-2-ethyl hexanoate, t-butylperoxy-2-ethyl hexanoate, t-butylperoxyisopropyl monocarbonate and the like peroxides, and 2,2-azobisisobutyronitrile, 2,2'-azobis-2-methylbutyronitrile, 2,2'-azobis-2,4-dimethylvaleronitrile and the like azo compounds.

In the suspension copolymerization, as described in the foregoing, a dispersion stabilizer is dissolved or dispersed in water, a mixture containing a monomer mixture, a porous structure forming agent and an initiator is added to it, a suspension copolymerization system is formed by stirring and emulsifying them and suspension copolymerization is carried out by heating the same to a predetermined temperature, but in this case, particle diameter of the porous copolymer particle to be finally obtained can be optionally adjusted by controlling shape and stirring rate of the mixing blade to be used in the above-mentioned stirring and emulsification. For example, particle diameter of the porous copolymer particle becomes small when the stirring rate is increased.

As mentioned above, after forming a suspension copolymerization system in the polymerization flask, the suspension copolymerization reaction is carried out over a predetermined period of time by heating the suspension copolymerization system to a predetermined temperature under stirring while introducing nitrogen gas or the like inert gas into the flask.

Conditions of the suspension copolymerization reaction may be optionally set, for example, the reaction temperature is within the range of from 60 to 90°C and the reaction time is approximately from 0.5 to 48 hours, though not limited thereto.

After completion of the suspension copolymerization reaction in this manner, the thus-obtained copolymer particle is washed by filtration using water or an organic solvent to remove the porous structure forming agent remained in the copolymer particle, unreacted monomers, heat degradation products of the initiator, dispersion stabilizer and the like impurities. The above-mentioned solvent for filtration washing can be optionally selected from the solvents which dissolve the above-mentioned substances to be removed, and for example, water, methanol, ethanol, acetonitrile, acetone, toluene, hexane, tetrahydrofuran and the like are used. These solvents are used alone, by an optional combination or in order. In order to wash the obtained copolymer particle with these solvents, for example, the reaction mixture obtained by suspension copolymerization is put into Buchner funnel laid with filter paper to carry out suction filtration, thus-obtained copolymer particle on the filter paper is stirred by adding an appropriate amount of a solvent for filtration washing, and again, the operation of carrying out suction filtration is repeated. As occasion demands, volatile substances in the copolymer particle can be removed by carrying out such a washing under heating.

When the porous copolymer particle obtained in this manner has a substituent group such as an acetoxy group as a precursor of the functional group required as the starting point of nucleic acid synthesis, the porous copolymer particle of interest is obtained by converting this substituent group possessed by the porous polymer particle into a hydroxyl group through its hydrolysis and then carrying out filtration, washing and drying.

According to the invention, it is desirable that the porous copolymer particle obtained by suspension copolymerization has a functional group required as the starting point of nucleic acid synthesis, or a substituent group as a precursor thereof, from the beginning. However, in some cases, a porous copolymer particle which does not have such a functional group or substituent group may be produced and then a reaction for adding a functional group to such a copolymer particle may be further carried out.

The porous copolymer particle obtained in this manner can be made into a powder by drying it or made into a dispersion by dispersing it in acetonitrile or the like optional organic solvent. Depending on circumstances, by subjecting the thus-obtained porous copolymer particles to classification or the like, minute particles, coarse particles, aggregated particles, foreign substances and the like contained in the particles can be removed. Accordingly, the solid-phase support for nucleic acid synthesis according to the invention can be obtained.

By the use of such a solid-phase support for nucleic acid synthesis of the invention, oligodeoxyribonucleotide, oligoribonucleotide or derivatives thereof can be synthesized with high synthesized amount and purity. As the method for synthesizing them, a conventionally known method can be employed.

Firstly, a nucleoside succinyl linker in which 5'-hydroxyl group is protected with dimethoxytrityl (DMT) group is loaded on the solid-phase support of the invention by allowing a hydroxyl group, an amino group and the like functional groups of the support to bind the linker through covalent bond, for example as shown in the following formula. Next, a reaction column is filled with a fixed amount of the solid-phase support loaded with the nucleoside succinyl linker, and this is installed in a nucleic acid automatic synthesizer. Thereafter, nucleic acid synthesis is carried out in accordance with the synthesizing program of the synthesizer, by feeding reagents for synthesis and organic solvent in order by a flow system. That is, a nucleic acid having intended sequence is synthesized by repeating a step for de-protecting the 5'-OH protecting group of nucleoside (DMT group) with an acid, a step for coupling the 5'-OH with nucleoside phosphoamidite, a step for capping unreacted 5'-OH by acetic anhydride and a step for oxidizing the formed phosphite to effect its conversion into a phosphate triester. The thus-synthesized nucleic acid is cleaved from the solid-phase support by hydrolyzing and digesting the succinyl linker using aqueous ammonium.

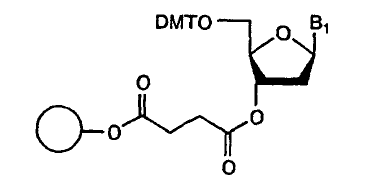

In the above formula, the open circle indicates the solid-phase support of the invention, DMT indicates dimethoxytrityl as the protecting group of 5'-OH, and B₁ indicates a base.

### Examples

### Inventive Example 1

### (Preparation of a solid-phase support for nucleic acid synthesis)

A 500 ml capacity separable flask equipped with a condenser, a stirrer and a nitrogen introducing tube was soaked in a constant temperature water bath, 262.5 g of distilled water and 2.6 g of polyvinyl alcohol (mfd. by KURARAY CO. LTD., average degree of polymerization of about 2000, saponification degree of 80% by mol) were charged thereinto, and polyvinyl alcohol was dissolved in water by keeping temperature of the constant temperature water bath at 28°C while stirring, thereby making an aqueous solution.

Separately, a mixture of 40.1 g of styrene, 3.6 g of p-acetoxystyrene, 7.2 g of divinylbenzene (55%) and 9.0 g of 1-vinyl-2-pyrrolidone was dissolved by adding 1.1 g of benzoyl peroxide (75%) thereto, 54.5 g of 2-ethylhexanol and 23.3 g of isooctane were further added thereto and mixed, and the thus-obtained solution was added to the above-mentioned polyvinyl alcohol aqueous solution.

Under a stream of nitrogen, the thus-obtained mixture was stirred for 30 minutes at 520 revolution per minute, thereby emulsifying the above-mentioned mixture, and then suspension copolymerization reaction was carried out at the same number of stirring revolutions for 8 hours while increasing temperature of the constant temperature water bath from 28°C to 80°C. After completion of the reaction, the constant temperature water bath was cooled to 28°C.

The reaction mixture obtained by such a suspension copolymerization reaction was filtered and washed using distilled water and acetone in that order and then dispersed in acetone to a total volume of about 1 liter. This dispersion was allowed to stand still and left as it was until the copolymer particles were precipitated and became such a state that the precipitate was not loosened even when the dispersion was slanted, and then acetone of the supernatant was discarded. A process in which the thus-obtained precipitate of copolymer particles was again dispersed by adding acetone thereto and allowed to stand still and then acetone was discarded was repeated 10 times, and the thus-obtained copolymer particles were classified. The finally-obtained dispersion was filtered and dried under a reduced pressure to obtain the copolymer particles as a powder.

Next, a 500 ml capacity separable flask equipped with a condenser, a stirrer and a nitrogen introducing tube was soaked in a constant temperature water bath, and 20 g of the above-mentioned copolymer powder and 100 g of ethanol were charged therein to effect dispersion of the copolymer powder into ethanol. An aqueous solution prepared by dissolving 1 g of sodium hydroxide in 50 g of distilled water was added to the above-mentioned dispersion and heated at 75°C for 24 hours to effect hydrolysis of the p-acetoxy group possessed by the copolymer. After completion of the reaction, the reaction mixture was neutralized by adding hydrochloric acid and then filtered and washed using distilled water and acetone in that order. The finally-obtained dispersion was filtered and the thus-obtained copolymer powder was dried under a reduced pressure to obtain a solid-phase support for nucleic acid synthesis as a powder.

Swelling volume when soaked in acetonitrile and median particle diameter of the thus-obtained copolymer particles were measured in accordance with the aforementioned methods. The results are shown in Table 3.

### (Loading of nucleoside linker on solid-phase support for nucleic acid synthesis)

A 1 g portion of the above-mentioned solid-phase support for nucleic acid synthesis, 0.18 g of DMT-dT-3'-succinate (mfd. by Beijing OM Chemicals), 0.09 g of HBTU (mfd. by Novabiochem), 0.048 ml of N,N-diisopropylethylamine (mfd. by Aldrich) and 10 ml of acetonitrile were mixed and allowed to undergo the reaction at room temperature for 12 hours while stirring, and then filtered and washed using acetonitrile and dried. The resultant product was mixed with 2.5 ml of CapA (20% acetic anhydride/80% acetonitrile), 2.5 ml of CapB (20% N-methylimidazole/30% pyridine/50% acetonitrile), 0.025 g of 4-dimethylamino-pyridine (mfd. by Aldrich) and 5 ml of acetonitrile and allowed to undergo the reaction at room temperature for 12 hours while stirring and then filtered and washed using acetonitrile. Thereafter, by drying the resultant product under a reduced pressure, a solid-phase support for nucleic acid synthesis loading 200 µmol/g of DMT-dT-3'-succinate per solid-phase support weight was obtained.

### (Synthesis of oligonucleotide dT₂₀)

By putting 5 mg of the above-mentioned DMT-dT-3'-succinate-loading solid-phase support into a reaction container and attaching the container to Applied Biosystems 3400 DNA Synthesizer (mfd. by Applied Biosystems), synthesis of an oligonucleotide dT₂₀ was carried out under conditions of synthesis scale of 1 µmol and DMT-off. Cleavage of the oligonucleotide from the solid-phase support and its deprotection were carried out by using concentrated aqueous ammonia and allowing it to undergo the reaction at 55°C for 15 hours.

The OD yield (corresponds to the synthesized amount) of the thus-obtained oligonucleotide obtained by absorbance measurement (260 nm) and the ratio of dT₂₀ (complete length oligonucleotide %) obtained by HPLC measurement (Alliance UV System manufactured by Waters, Hydrosphere C18 manufactured by YMC Co., Ltd.) are shown in Table 3. Also, a value of the product of the above-mentioned OD yield and the ratio of dT₂₀ (complete length oligonucleotide %) is shown in Table 3. This value of the product means synthesized amount of an oligonucleotide of 20 bases having the intended sequence (dT₂₀).

### Inventive Examples 2 ,3, 5 and 7 to 9 and comparative examples a and b.

Using the monomers, porous structure forming agents, polymerization initiator, dispersion stabilizer and distilled water with the amounts shown in Table 1, solid-phase supports for nucleic acid synthesis each constituted of porous copolymer particles were prepared in the same manner as in Inventive Example 1. Swelling volume when soaked in acetonitrile and median particle diameter of the thus-obtained copolymer particles are shown in Table 3.

The nucleoside linker was loaded on the thus-obtained each solid-phase support for nucleic acid synthesis in the same manner as in Inventive Example 1, and using this, the oligonucleotide dT₂₀ was synthesized. The OD yield of the oligonucleotide measured in the same manner as in Inventive Example 1 and the ratio of dT₂₀ (complete length oligonucleotide %) are shown in Table 3. Also, a value of the product of the above-mentioned OD yield and the ratio of dT₂₀ (complete length oligonucleotide %) is shown in Table 3.

### Comparative Examples 1 to 9

Using the monomers, porous structure forming agents, polymerization initiator, dispersion stabilizer and distilled water with the amounts shown in Table 2, solid-phase supports for nucleic acid synthesis each constituted of porous copolymer particles were prepared in the same manner as in Inventive Example 1. Swelling volume when soaked in acetonitrile and median particle diameter of the thus-obtained copolymer particles are shown in Table 4.

The nucleoside linker was loaded on the thus-obtained each solid-phase support for nucleic acid synthesis in the same manner as in Inventive Example 1, and using this, the oligonucleotide dT₂₀ was synthesized. The OD yield of the oligonucleotide measured in the same manner as in Inventive Example 1 and the ratio of dT₂₀ (complete length oligonucleotide %) are shown in Table 3. Also, a value of the product of the above-mentioned OD yield and the ratio of dT₂₀ (complete length oligonucleotide %) is shown in Table 3.

As is evident from the results shown in Table 3 and Table 4, when the solid-phase supports for nucleic acid synthesis obtained in Inventive Examples 1 to 3, 5 and 7 to 9 are used, the OD yield of oligonucleotide can be increased while keeping high complete length oligonucleotide %, in comparison with the case of using the porous copolymer particles of Comparative Examples 1 to 9 as the solid-phase supports.

**Table 1**

| | | Inventive Examples 1-3, 5 and 7-9 and Comparative Examples a and b | | | | | | | | |
|---|---|---|---|---|---|---|---|---|---|---|
| | | 1 | 2 | 3 | a | 5 | b | 7 | 8 | 9 |
| Monomers (g) | | | | | | | | | | |
| | Styrene | 40.1 | 49.1 | 46.1 | 31.3 | 35.7 | 37.8 | 40.9 | 37.1 | 18.0 |
| | p-Acetoxystyrene | 3.6 | 3.6 | 3.6 | 17.3 | 3.6 | 11.9 | 3.6 | 3.6 | 3.6 |
| | Divinylbenzene (55%) | 7.2 | 7.2 | 7.2 | 5.4 | | 4.3 | | 7.2 | 14.4 |
| | 1-Vinyl-2-pyrrolidone | 9.0 | | | | | | | | |
| | 2-Vinylpyridine | | | 3.0 | | | | | | |
| | Triethylene glycol dimethacrylate | | | | | | | 15.4 | | |
| | Methyl methacrylate | | | | | | | | 12.0 | |
| | Methacrylonitrile | | | | | | | | | 23.9 |
| | Trimethylolpropane trimethacrylate | | | | | 20.5 | | | | |
| Porous structure forming agents (g) | | | | | | | | | | |
| | 2-Ethylhexanol | 54.5 | 54.5 | 62.8 | 41.6 | 50.3 | 49.1 | | | 54.5 |
| | Isooctane | 23.3 | 23.3 | 26.9 | 17.8 | 21.5 | 21.1 | | | 23.3 |
| | 1-Decanol | | | | | | | 79.6 | 85.3 | |
| | Toluene | | | | | | | 4.2 | 4.5 | |
| Polymerization initiator (g) | | | | | | | | | | |
| | Benzoyl peroxide (75%) | 1.1 | 1.1 | 1.1 | 1.0 | 1.1 | 1.0 | 1.1 | 1.1 | 1.1 |
| Dispersion stabilizer (g) | | | | | | | | | | |
| | Polyvinyl alcohol | 2.6 | 2.6 | 2.5 | 2.5 | 2.6 | 2.3 | 2.6 | 2.6 | 2.6 |
| Distilled water (g) | | 262.5 | 262.5 | 250.6 | 243.1 | 262.5 | 262.5 | 262.5 | 262.5 | 262.5 |
| Polymerization flask capacity (ml) | | 500 | 500 | 500 | 500 | 500 | 500 | 500 | 500 | 500 |
| Emulsification agitation speed (rpm) | | 520 | 400 | 520 | 320 | 520 | 320 | 520 | 520 | 520 |

**Table 2**

| | | Comparative Examples | | | | | | | | |
|---|---|---|---|---|---|---|---|---|---|---|
| | | 1 | 2 | 3 | 4 | 5 | 6 | 7 | 8 | 9 |
| Monomers (g) | | | | | | | | | | |
| | Styrene | 37.1 | 46.1 | 43.2 | 233.7 | 50.3 | 36.7 | 233.7 | 73.2 | 233.7 |
| | p-Acetoxystyrene | 3.6 | 3.6 | 6.5 | 17.1 | 3.6 | 11.9 | 17.1 | 4.2 | 17.1 |
| | Divinylbenzene (55%) | 7.2 | 7.2 | 4.3 | 34.2 | | 5.4 | 34.2 | 15.0 | 34.2 |
| | Pentafluorostyrene | 12.0 | | | | | | | | |
| | 2-Vinylpyridine | | 3.0 | | | | | | | |
| | Triethylene glycol dimethacrylate | | | | | 5.9 | | | | |
| Porous structure forming agents (g) | | | | | | | | | | |
| | 2-Ethylhexanol | 54.5 | 54.5 | 41.6 | 239.4 | 62.8 | 34.0 | 259.4 | 73.9 | 259.4 |
| | Isooctane | 23.3 | 23.3 | 17.8 | 102.6 | 26.9 | 14.6 | 111.2 | 31.7 | 111.2 |
| Polymerization initiator (g) | | | | | | | | | | |
| | Benzoyl peroxide (75%) | 1.1 | 1.1 | 1.0 | 5.3 | 1.1 | 1.0 | 5.3 | 1.8 | 5.3 |
| Dispersion stabilizer (g) | | | | | | | | | | |
| | Polyvinyl alcohol | 2.6 | 2.6 | 2.5 | 12.5 | 2.6 | 2.6 | 12.5 | 16.0 | 12.5 |
| Distilled water (g) | | 262.5 | 262.5 | 243.1 | 1250 | 262.5 | 253.8 | 1250 | 1600 | 1250 |
| Polymerization flask capacity (ml) | | 500 | 500 | 500 | 2000 | 500 | 500 | 2000 | 2000 | 2000 |
| Emulsification agitation speed (rpm) | | 520 | 520 | 380 | 400 | 520 | 380 | 280 | 400 | 650 |

**Table 3**

| | Inventive Examples 1-3, 5 and 7-9 and Comparative Example a and b | | | | | | | | |
|---|---|---|---|---|---|---|---|---|---|
| | 1 | 2 | 3 | a | 5 | b | 7 | 8 | 9 |
| Swelling volume (ml/g) in acetonitrile (ml/g) | 3.54 | 4.03 | 4.10 | 4.40 | 4.49 | 4.85 | 5.01 | 5.79 | 6.53 |
| Median particle diameter (µm) | 67 | 73 | 75 | 177 | 80 | 176 | 75 | 85 | 60 |
| OD yield (/µmol) : (1) | 146 | 130 | 134 | 127 | 132 | 130 | 158 | 146 | 135 |
| Complete length (%) : (2) | 84 | 80 | 74 | 92 | 86 | 95 | 81 | 81 | 86 |
| (1) x (2) | 12298 | 10432 | 9946 | 11702 | 11352 | 12388 | 12830 | 11858 | 11627 |

**Table 4**

| | Comparative Examples | | | | | | | | |
|---|---|---|---|---|---|---|---|---|---|
| | 1 | 2 | 3 | 4 | 5 | 6 | 7 | 8 | 9 |
| Swelling volume (ml/g) in acetonitrile (ml/g) | 2.76 | 2.90 | 2.90 | 3.10 | 3.31 | 3.40 | 3.80 | 4.00 | 4.52 |
| Median particle diameter (µm) | 45 | 66 | 126 | 97 | 65 | 130 | 130 | 38 | 40 |
| OD yield (/µmol) (1) | 74 | 101 | 70 | 107 | 92 | 104 | 86 | 108 | 72 |
| Complete length (%) (2) | 81 | 41 | 80 | 66 | 70 | 74 | 71 | 80 | 63 |
| (1)x(2) | 5962 | 4133 | 5632 | 7072 | 6440 | 7696 | 6111 | 8632 | 4534 |

While the present invention has been described in detail and with reference to specific embodiments thereof, it will be apparent to one skilled in the art that various changes and modifications can be made therein without departing from the scope thereof.

## Claims

1. A solid-phase support for nucleic acid synthesis, which comprises a porous copolymer particle comprising a multifunctional vinyl monomer unit having two or more vinyl groups in one molecule and a monofunctional vinyl monomer unit having one vinyl group in one molecule, wherein the solid-phase support has a swelling volume when soaked in acetonitrile of 3.5 ml/g or more and has a median particle diameter measured by a laser scattering particle size distribution measuring method within a range of from 50 to 120 µm.

2. The solid-phase support according to claim 1, wherein the monofunctional vinyl monomer unit comprises styrene, and the multifunctional vinyl monomer unit is at least one species selected from the group consisting of divinylbenzene, (poly)ethylene glycol di(meth)acrylate, (poly)propylene glycol di(meth)acrylate and an alkane polyol poly(meth)acrylate.

3. The solid-phase support according to claim 1, wherein the monofunctional vinyl monomer unit comprises styrene and acetoxystyrene.

## Patentansprüche

1. Festphasenträger für die Nucleinsäuresynthese, welcher ein poröses Copolymerteilchen umfasst, das eine multifunktionelle Vinylmonomereinheit mit zwei oder mehr Vinylgruppen in einem Molekül und eine monofunktionelle Vinylmonomereinheit mit einer Vinylgruppe in einem Molekül umfasst, wobei der Festphasenträger ein Quellvolumen von 3,5 ml/g oder mehr aufweist, wenn er in Acetonitril eingeweicht ist, und einen mittleren Teilchendurchmesser, gemessen durch ein Verfahren zur Messung der Teilchengrößenverteilung mittels Laserstreuung, innerhalb eines Bereichs von 50 bis 120 µm aufweist.

2. Festphasenträger nach Anspruch 1, wobei die monofunktionelle Vinylmonomereinheit Styrol umfasst und die multifunktionelle Vinylmonomereinheit wenigstens eine Spezies ausgewählt aus der Gruppe bestehend aus Divinylbenzol, (Poly)ethylenglycoldi(meth)acrylat, (Poly)propylenglycol-di(meth)acrylat und einem Alkan-polyolpoly(meth)acrylat ist.

3. Festphasenträger nach Anspruch 1, wobei die monofunktionelle Vinylmonomereinheit Styrol und Acetoxystyrol umfasst.

## Revendications

1. Support en phase solide pour la synthèse d'acide nucléique, comprenant une particule poreuse de copolymère comprenant un motif multifonctionnel monomère de vinyle ayant deux groupes vinyle ou plus dans une molécule et un motif monofonctionnel monomère de vinyle ayant un groupe vinyle dans une molécule, le support en phase solide ayant un volume de gonflement lorsqu'il est immergé dans de l'acétonitrile de 3,5 ml/g ou plus et ayant un diamètre moyen de particule mesuré à l'aide d'un procédé de mesure de la distribution de la taille des particules par diffusion laser situé dans une plage de 50 à 120 µm.

2. Support en phase solide selon la revendication 1, dans lequel le motif monofonctionnel monomère de vinyle comprend du styrène, et le motif multifonctionnel monomère de vinyle est au moins une espèce choisie parmi le groupe constitué du divinylbenzène, di(méth)acrylate de (poly)éthylène glycol, di(méth)acrylate de (poly)propylène glycol et d'un poly(méth)acrylate d'alcane polyol.

3. Support en phase solide selon la revendication 1, dans lequel le motif monofonctionnel monomère de vinyle comprend du styrène et de l'acétoxystyrène.
